# FASCICULE DE BREVET EUROPEEN

(11) **EP 3 542 058 B1**
(45) Date de publication et mention de la délivrance du brevet: **03.06.2020**
(21) Numéro de dépôt: 17794370.1
(22) Date de dépôt: 11.10.2017
(51) Int. Cl.: F03G 3/08, F16N 7/02, F16F 15/30, F01M 11/04

(54) **DISPOSITIF DE LUBRIFICATION SOUS VIDE POUR VOLANT D'INERTIE**
VAKUUMSCHMIERVORRICHTUNG FÜR EIN SCHWUNGRAD
LUBRICATION DEVICE FOR A FLYWHEEL OPERATING UNDER VACUUM

(30) Priorité: 16.11.2016 FR 1661089
(43) Date de publication de la demande: 25.09.2019
(73) Titulaire: Energiestro, 28200 Châteaudun (FR)
(72) Inventeur: GENESSEAUX, Andre, 28200 Conie- Molitard (FR)
(74) Mandataire: Plasseraud IP
(86) Numéro de dépôt international: PCT/FR2017/052794
(87) Numéro de publication internationale: WO 2018/091789

(56) Documents cités:
- JP-A- S6 199 737
- JP-A- S6 199 738
- JP-A- S62 178 777
- JP-A- 2003 097 792

## Description

L'invention concerne un dispositif de lubrification pour un appareil tournant, tel qu'un volant d'inertie destiné à stocker de l'énergie cinétique, placé dans une enceinte sous vide.

L'invention concerne tout type de volant d'inertie, et particulièrement un volant fabriqué à base de béton, précontraint, présentant une résistance élevée à la compression, comme par exemple décrit par la demande de brevet français n° 14/02430, au nom du demandeur.

Les volants d'inertie comportent de manière connue un axe tournant, usuellement vertical, autour duquel est fixée une masse lourde et résistante.

L'axe repose sur une structure fixe par des paliers.

L'axe est relié à un moteur électrique qui l'entraine en rotation. Après l'arrêt de l'alimentation du moteur électrique, la masse du volant ayant emmagasiné de l'énergie cinétique continue de tourner et peut alors restituer de l'énergie mécanique, qui est à son tour reconvertie en énergie électrique en utilisant le moteur comme génératrice électrique.

La rotation sur elle-même de la masse crée de l'énergie cinétique qui peut être ainsi stockée temporairement, en vue d'utilisation diverses, comme pour le lissage des énergies renouvelables intermittentes de type éolien, solaire, l'alimentation en électricité de sites isolés, la restitution d'énergie pour le freinage de véhicules, etc.

Comparé à des dispositifs de stockage d'énergie électrique tels que les accumulateurs électriques, les volants d'inertie présentent une durée de vie quasiment illimitée, réduisant le coût de stockage.

Les volants d'inertie sont placés dans une enceinte sous vide afin de diminuer les pertes d'énergie mécanique dues aux frottement, décrit par exemple par la demande de brevet japonnais JP6217877 A. Les paliers / roulements nécessitent d'être lubrifiés pour avoir une durée de vie illimitée.

Or, la lubrification sous vide présente des difficultés, et ce quel que soit le lubrifiant utilisé.

Si le lubrifiant est de la graisse, le vide cause une évaporation qui diminue rapidement son pouvoir lubrifiant. Si on rajoute de la graisse dans le roulement, l'excès de graisse cause du frottement qui dissipe l'énergie stockée dans le volant. Pour éviter cela, on change les roulements et leur graisse après quelques années, avec les conséquences pécuniaires qui en découlent, et d'autant plus pour les volants de grande taille.

L'huile est difficile à faire circuler sous vide, car les pompes ne fonctionnent pas dans le vide, étant conçues pour fonctionner avec une pression absolue strictement positive. Quand une pompe aspire, elle crée en fait une dépression (pression plus basse que la pression absolue), et c'est la pression extérieure plus élevée qui pousse le fluide dans la pompe. Dans le vide, la pression absolue est nulle, il n'est donc pas possible de créer une dépression, et une pompe ne peut donc pas aspirer.

On a proposé d'augmenter la pression absolue en immergeant la pompe dans une hauteur d'huile suffisante. Cependant, ceci augmente considérablement l'encombrement vertical du volant. De plus, la pompe devant nécessairement être placée au point le plus bas, sa maintenance serait très difficile, les volants étant en général accessibles par le haut. Par ailleurs, on a proposé, de façon connue, de remplacer les roulements par des paliers magnétiques, mais leur coût prohibitif limite fortement l'intérêt de cette option.

Ainsi, l'art antérieur n'offre pas de solution permettant de satisfaire les contraintes contradictoires que sont, dans le cas d'un volant d'inertie, placé sous vide :
- Coût de structure faible ;
- Paliers simples et peu onéreux ;
- Faible encombrement, notamment sous le volant ;
- Pompe pas située en partie basse du volant.

L'invention remédie à cette situation.

A cette fin, selon l'invention, le dispositif de lubrification d'un appareil tournant dans le vide, tel qu'un volant d'inertie, ledit appareil comportant un axe tournant par rapport à une structure porteuse fixe, par l'intermédiaire d'au moins un palier ou roulement, ledit appareil étant placé dans une enceinte reliée à des moyens de mise sous vide, est caractérisé en ce qu'il comporte :
∘ un réservoir de fluide lubrifiant relié par des conduits au bas de l'enceinte d'une part, et au palier d'autre part ;
∘ et un moyen de circulation du fluide apte à relier le réservoir soit aux moyens de mise sous vide, pour remplir le réservoir par gravité depuis l'enceinte, soit à l'atmosphère, pour lubrifier le palier.

Ainsi, le réservoir est, en situation normale, relié au vide, et se remplit donc de fluide de lubrification par gravité. Pour déclencher la lubrification, le réservoir est relié à la pression atmosphérique, provoquant la remontée du fluide vers le haut de l'enceinte.

Avantageusement, le moyen de circulation du fluide comporte une vanne à trois voies reliant le réservoir soit aux moyens de mise sous vide soit à l'atmosphère.

De préférence, il est prévu une vanne à deux voies, normalement ouverte, disposée entre le réservoir et l'enceinte, et selon une forme avantageuse, commandée par un vérin à piston dont une chambre est reliée au réservoir, et l'autre chambre à l'enceinte, le piston commandant ladite vanne.

De plus, le dispositif comporte un capteur de débit disposé entre le réservoir et le palier, et un filtre en amont du capteur.

Le réservoir est placé au même niveau, ou plus bas, que la partie basse de l'enceinte.

Le dispositif comporte un clapet antiretour normalement ouvert entre le réservoir et l'enceinte.

Il est en outre prévu une électrovanne à trois voies dont les deux sorties sont reliées chacune à un roulement / palier.

L'invention concerne aussi un volant d'inertie comportant un corps massique en un matériau principal, tel que du béton, disposé sur ou associé à un axe tournant par rapport à une structure porteuse fixe, par au moins un palier ou roulement, ledit volant étant placé dans une enceinte, accueillant le volant et le palier, et reliée à des moyens de mise sous vide, caractérisé en ce qu'il comporte un dispositif de lubrification tel que présentement décrit.

Enfin, l'invention concerne aussi un procédé de lubrification d'un volant d'inertie comprenant un corps, en un matériau, tel que du béton, apte à tourner sur lui-même sur un axe vertical fixe, en étant en appui sur au moins un roulement/palier, et comportant des moyens de lubrification, procédé dans lequel :
- on place le volant dans une enceinte étanche ;
- on prévoit un moyen de mise sous vide (tel qu'une pompe à vide) relié à l'enceinte ;
- on prévoit un réservoir de lubrifiant ;
- on relie par des conduits le réservoir de lubrifiant au bas de l'enceinte d'une part, et au palier d'autre part ;
- on relie le réservoir soit au vide, pour le remplir par gravité depuis l'enceinte, soit à l'atmosphère, pour lubrifier le palier.

Dans la suite de la description, les termes « intérieur », « extérieur », « inférieur », « supérieur », « amont » « aval » s'entendent en qualifiant les parties ou éléments visés, dans le cadre d'une installation normale du volant.

La présente invention est maintenant décrite à l'aide d'exemples uniquement illustratifs et nullement limitatifs de la portée de l'invention, et à partir des illustrations ci-jointes, dans lesquelles :
- La figure 1 illustre une vue en coupe axiale d'une moitié du volant et l'intégralité du système de lubrification de l'invention ;
- La figure 2 est un schéma du circuit de circulation de lubrifiant en fonctionnement, le volant étant montré partiellement ;
- La figure 3 est un schéma d'une variante, pour un volant muni de deux roulements, respectivement supérieur et inférieur, le circuit permettant de lubrifier les deux roulements de manière séparée ;
- La figure 4 est une variante de la commande de la communication entre le réceptacle et le réservoir ;
- La figure 5 est un schéma partiel en coupe d'un clapet anti-retour entre le réservoir et le réceptacle, à l'état ouvert ;
- La figure 6 montre une variante de la figure 1, munie d'une seconde réserve située en hauteur.

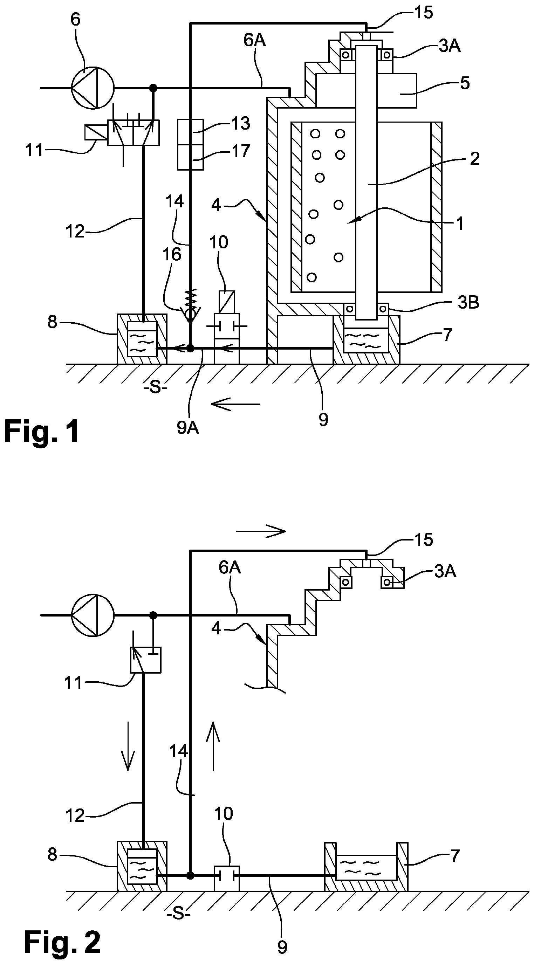

En référence à la figure 1, le volant d'inertie 1 de l'invention, muni d'un système de lubrification, est de forme cylindrique, allongé selon un axe vertical, et centré sur un axe rotatif vertical 2 tournant sur lui-même et monté sur deux paliers fixes, supérieur 3A et inférieur 3B.

Ainsi, le volant 1 tourne sur lui -même par rapport aux paliers fixes 3A et 3B.

Le volant est disposé dans une enceinte étanche 4 de forme complémentaire libérant un espace autour du volant. Les paliers sont situés et fixés en parties respectivement haute et basse de l'enceinte 4.

Un moteur/alternateur 5, associé à la partie haute de l'enceinte 4, sous le palier supérieur 3A, permet d'accélérer et ralentir le volant pour augmenter ou diminuer son énergie cinétique.

Un système de lubrification est prévu et décrit ci-après.

Ledit système comporte un moyen de mise sous vide, tel qu'une pompe à vide 6, reliée par un conduit 6A, à l'enceinte 4, pour faire un vide à l'intérieur de celle-ci, entre par exemple 1/100 et 1/1000 d'atmosphère.

Un fluide lubrifiant est injecté en partie haute de l'enceinte, au-dessus du palier supérieur 3A, de la manière décrite plus loin.

Un réceptacle 7 est prévu et fait partie de l'embase supportant le palier inférieur 3B et l'enceinte, dans le fond de l'enceinte 4. Le réceptacle 7 recueille le lubrifiant s'écoulant par gravité dans l'enceinte.

Le réceptacle 7 et l'enceinte reposent sur le sol S.

Le système de lubrification de l'invention comporte en outre :
- un réservoir (ou réserve) étanche 8 de lubrifiant, en partie basse, reposant sur le sol S, au niveau du réceptacle 7 (ou à un niveau inférieur à celui-ci) ; le réservoir 8 est relié à ce dernier par un conduit inférieur 9 ;
- une vanne à deux voies 10 disposée sur le conduit inférieur 9 ;
- une vanne à trois voies 11 disposée sur un conduit 12 reliant le réservoir 8 soit au vide (via le conduit 6A), soit à l'atmosphère ;
- un capteur 13, sous la forme d'un débitmètre, placé sur un conduit 14 reliant d'une part la partie aval 9A du conduit 9 (entre la vanne à deux voies 10 et le réservoir 8) et d'autre part l'entrée d'alimentation 15 de l'enceinte 4 en partie haute de cette dernière, au-dessus du palier supérieur 3A.
- un clapet anti-retour 16 disposé sur le conduit 14, entre la partie 9A du conduit 9 et le débitmètre 13 ;
- un filtre 17 placé en amont du débitmètre 13 sur le conduit 14.

La vanne 10 est du type à deux voies, normalement ouverte. Autrement dit, en l'absence de commande, elle permet le passage du lubrifiant dans le conduit 9, depuis le réceptacle 7 vers le réservoir 8.

La vanne 11 est du type à trois voies, et elle met en communication, en l'absence de commande, le réservoir 8 avec l'enceinte 4 qui est sous vide. De manière générale, le réservoir 8, en l'absence de commande de la vanne 11, est mis en communication avec le vide, c'est-à-dire avec tout moyen apte à créer un vide (moyen de mise sous vide), ou tout milieu où règne un vide (tel que l'enceinte 4). Dans une forme de réalisation (non représentée) incluant une série de plusieurs volants, associés à un même moyen de mise sous vide, le réservoir 8, associé à chaque volant, est alors apte à être relié au moyen commun de mise sous vide ou à l'enceinte du volant voisin, ou à l'enceinte du volant auquel est associé ledit réservoir.

Quand elle est actionnée, la vanne 11 relie le réservoir 8 à l'air ambiant (atmosphère).

Le réservoir 8, le conduit 9 et la vanne 10 sont placés le plus bas possible, près du sol S, sans point haut, et au même niveau que, ou en dessous de, la partie basse de l'enceinte. Ceci fait que le lubrifiant du réceptacle 7 de l'enceinte 4 remplit le réservoir 8 par le seul effet de la gravité, selon le principe des vases communicants.

En l'absence de commande des vannes 10 et 11, la pression au-dessus du liquide est la même dans l'enceinte 4 et dans le réservoir 8, grâce à la vanne 11. En situation normale, le réservoir 8 est donc rempli d'une certaine quantité de lubrifiant.

Lorsque les vannes 10 et 11 sont commandées, la vanne 11 relie le réservoir 8 à l'atmosphère, la vanne 10 ferme le conduit 9, et la pression atmosphérique pousse le lubrifiant du réservoir 8 vers le point 15 d'entrée dans l'enceinte, juste au-dessus du palier supérieur.

Les vannes 10 et 11 sont commandés à intervalles réguliers, par exemple de quelques heures, pendant quelques secondes, pour assurer une lubrification optimale des paliers 3A et 3B. Ces intervalles et durées sont déterminés par essais successifs, puis appliqués par un automate programmable ou un module de temporisation.

Le système de lubrification de l'invention permet donc de lubrifier les roulements de façon très fiable, très simple et très économique, car une vanne coûte beaucoup moins cher qu'une pompe, et est beaucoup plus fiable.

On décrit ci-après des variantes de réalisation de l'invention.

En référence à la figure 1, le volant comporte un clapet anti-retour 16 sur le conduit 14, afin d'empêcher le lubrifiant de redescendre dans le réservoir 8 après la lubrification. Cela réduit le volume d'huile à pomper à chaque opération de lubrification. Le lubrifiant étant poussé par de l'air, une petite quantité d'air entre dans l'enceinte après chaque lubrification, et la pompe à vide devra évacuer cet air, avec la consommation d'énergie qui en résulte.

Le système de l'invention peut fonctionner avec une commande dite en « boucle fermée » permettant de s'assurer d'une lubrification optimale et efficace, à chaque cycle.

Une première solution pour ce faire consiste à utiliser un capteur de niveau dans le réservoir 8. Néanmoins, ce capteur reste difficile à changer en cas de panne.

Selon une alternative préférée, on dispose un capteur de débit 13 sur le conduit 14 de remontée du lubrifiant. Un capteur simple du type indiquant si le débit est supérieur à une valeur donnée (capteur « tout ou rien »), suffit. La société GEMS Sensors en produit une grande variété, comme par exemple la série FS-380. On peut également utiliser un capteur de débit à impulsions, par exemple la série FT-110 (de GEMS Sensors) : chaque impulsion indique qu'un certain volume d'huile est passé, ce qui permet d'arrêter la lubrification de façon plus précise qu'une temporisation.

Le lubrifiant récupéré dans le réceptacle 7 nécessite d'être nettoyé, pour éviter une usure prématurée des paliers / roulements 3A et 3B. A cet effet, on prévoit un filtre 17, disposé avantageusement sur le conduit de remontée 14. Le filtre 17 est ainsi en partie haute du volant, donc accessible pour la maintenance, et il protège en outre le capteur 13 des impuretés.

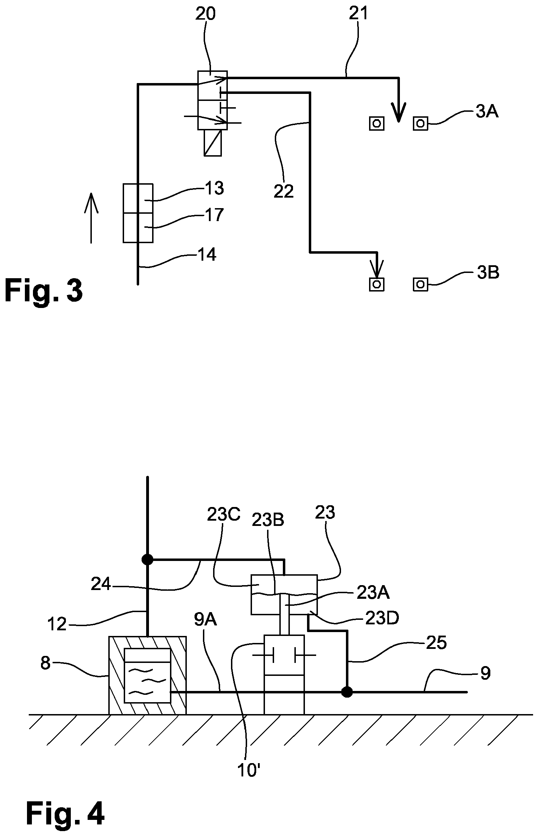

Le système de l'invention permet, selon la variante montrée sur la figure 3, de lubrifier les roulements individuellement, car ils peuvent avoir des besoins différents.

On prévoit à cet effet une seconde vanne trois voies 20 disposée en aval du filtre 17 et du capteur 13, avec deux conduits de sortie 21, 22 reliés à chaque roulement 3A, 3B, pour alimenter ces derniers.

La durée de lubrification peut être différente d'un roulement à l'autre, afin d'adapter la quantité de lubrifiant à leurs besoins respectifs. Le capteur 13 permet de vérifier que chaque roulement est bien lubrifié, ce qui permet d'arrêter le volant en toute sécurité si la lubrification n'est plus assurée (perte de lubrifiant, filtre bouché, etc.).

La figure 4 montre une variante améliorée.

La vanne 10 (de la figure 1), étant obligatoirement située en partie inférieure de l'installation, peut se révéler difficile à dépanner en cas de panne (défaut de la bobine, rupture de câble, etc.).

La variante proposée en figure 4 fait appel à une vanne 10' à commande pneumatique (plutôt qu'une commande électrique de la vanne 10 du système de la figure 1). L'électroaimant (de la vanne 10 de la figure 1) est ici remplacé par un vérin / chambre 23 comprenant un piston mobile 23A solidaire d'une membrane souple 23B séparant la chambre en deux compartiments 23C et 23D, respectivement reliés, par un conduit 24 au réservoir 8, et par un conduit 25, au conduit inférieur 9 relié au réceptacle 7.

En situation normale, la pression (en fait le vide) est la même dans chaque compartiment 23C et 23D, et le piston est au repos ; la vanne 10' est donc ouverte pour laisser le lubrifiant remplir le réservoir 8.

Pour déclencher la lubrification, le réservoir 8 est relié à la pression atmosphérique (vanne 11 - figure 1), ce qui crée une différence de pression entre les compartiments 23C et 23D, provoquant le mouvement du piston 23A, fermant ainsi la vanne 10'.

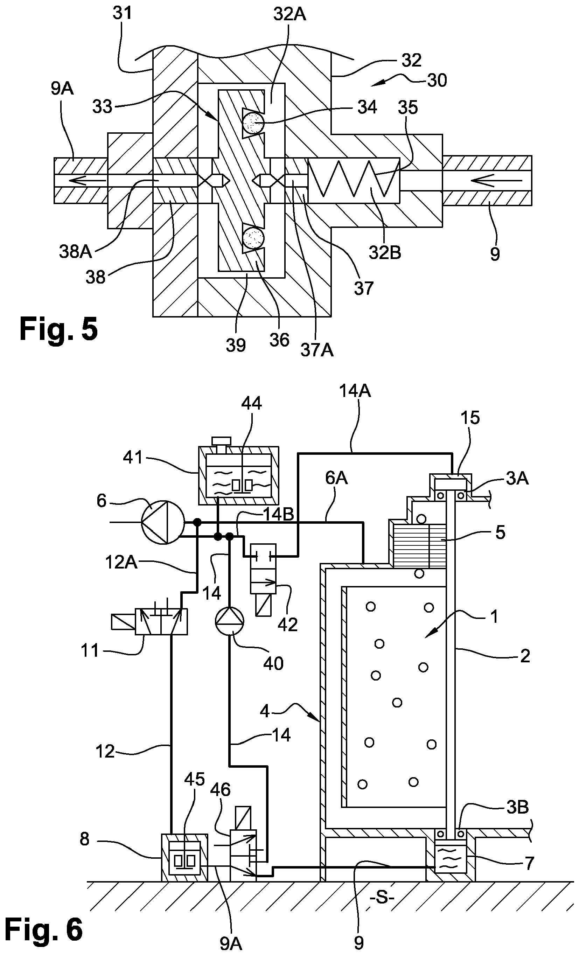

Sur la figure 5, qui montre une autre variante améliorée, on a représenté en détail la coupe d'un clapet anti-retour 30, normalement ouvert, appelé à remplacer la vanne 10 (de la figure 1) ou 10' (de la figure 4).

Le clapet 30 comporte :
- un corps divisé en une partie gauche 31 et une partie droite 32, cette dernière définissant un premier logement intérieur (dit diamétral) 32A et un second logement intérieur (dit axial) 32B ;
- un élément mobile 33 dans le logement 32A, comprenant un disque 36 et pourvu d'un moyeu axial 37, 38 dépassant de chaque face du disque, la face du disque 36 tournée vers le logement axial 32B étant pourvue d'une gorge annulaire dans laquelle est logé un joint torique 34 ;
- un ressort 35 dans le second logement 32B et butant par une extrémité contre la partie arrière 37 du moyeu.

Les parties avant 38 et arrière 37 du moyeu comportent des trous traversant 37A et 38A faisant communiquer respectivement :
- le premier logement 32A avec le second logement axial 32B (qui communique avec le conduit 9) ;
- le premier logement 32A avec le conduit 9A.

Le lubrifiant peut passer ainsi du conduit 9 vers le conduit 9A au travers du clapet 30.

Le disque 36 présente un diamètre extérieur légèrement inférieur au diamètre intérieur du logement diamétral 32A. Ceci libère un passage étroit 39 pour le lubrifiant. L'élément mobile 33 peut se déplacer en translation entre les deux parties 31, 32, grâce aux parties avant et arrière 37 et 38 du moyeu, qui pénètrent dans respectivement le logement axial 32B et dans un évidement axial prévu dans la partie avant 31. Les parties 37 et 38 du moyeu guident en translation l'élément 33 mobile.

En situation normale, le ressort 35 pousse l'élément mobile 33 vers la partie 31, ce qui éloigne le joint torique 34 de la face arrière du logement 32A. Le lubrifiant passe alors librement au travers du clapet 30, en traversant successivement le conduit 9, le logement axial 32B, le trou traversant 37A, le logement diamétral 32A, le passage étroit 39, de nouveau le logement diamétral 32A, le trou 38A, jusqu'au conduit 9A.

Lorsque le réservoir 8 est mis à la pression atmosphérique (par la commande de la vanne 11 - figure 1), le lubrifiant du réservoir 8 commence à s'écouler en sens inverse vers le réceptacle 7 de l'enceinte 2. Le passage étroit 39 crée alors une perte de charge, engendrant une différence de pression entre les faces du disque 36. Le ressort 35 présente une souplesse calculée pour que cette différence de pression suffise à déplacer la pièce 33 (et le disque 36), jusqu'à ce que le joint torique 34 porte contre la face arrière du logement diamétral 32A et de ce fait stoppe l'écoulement.

On empêche ainsi le retour du lubrifiant du réservoir 8 vers le réceptacle 7 pendant la lubrification, sans nécessiter d'organe de commande tel qu'un électroaimant.

La figure 6 montre une variante dite « à carter sec » où la réserve de lubrifiant n'est pas dans le réceptacle 7 de l'enceinte 4, mais dans un réservoir d'huile 41 disposé en partie haute du volant.

L'électrovanne 11 est identique à celle de la figure 1, et relie le haut du réservoir 8 au vide en situation normale. L'électrovanne 10 (de la figure 1) à deux voies est remplacée ici par une électrovanne 46 à trois voies, qui relie le bas du réservoir 8 au réceptacle 7 de l'enceinte 2 en situation normale. Le réservoir 8 comporte un capteur de niveau 45 qui permet de surveiller que le niveau d'huile dépasse une certaine valeur. Quand cela arrive, on pompe l'huile du réservoir 8 vers le réservoir 41.

Pour cela, on commande les électrovannes 11 et 46, ainsi qu'une pompe 40. Le réservoir 8 est alors mis à la pression atmosphérique et le bas du réservoir 8 est connecté à la pompe 40 par le conduit 14. La pompe 40 remonte le lubrifiant du réservoir 8 vers le réservoir 41 à travers le conduit 14B. Le pompage est stoppé lorsque le capteur de niveau 45 indique que le réservoir 8 est vide.

Pour lubrifier les roulements 3A et 3B du volant 1, on ouvre l'électrovanne 42, du type normalement fermée, placée entre le réservoir 41 et le point d'alimentation haut 15 de l'enceinte.

La pression atmosphérique pousse alors le lubrifiant du réservoir 41 vers l'enceinte 2 sous vide, par les conduits 14A et 14 B.

Un capteur de niveau 44 dans le réservoir 41 permet de détecter un manque de lubrifiant.

La pompe à vide 6 peut être lubrifiée directement par le lubrifiant du réservoir 41, via le conduit 14B, ce qui simplifie sa maintenance.

L'avantage de cette variante (figure 6) est de réduire la hauteur du système de lubrification, puisque le lubrifiant est stocké en partie haute. Le roulement 3B peut alors être placé très proche du sol, quelques centimètres. Cela permet de disposer le volant dans un espace de hauteur limitée : bâtiment, conteneur.

Le béton constituant le volant est de préférence un béton fibré à hautes performances de résistance à la compression supérieure à 80 MPa. Plus sa résistance est élevée, plus sa capacité à stocker d'énergie est grande.

Le corps du volant est avantageusement recouvert de fibres.

Le lubrifiant peut être de l'huile, de type huile pour pompe à vide.

## Revendications

1. Dispositif de lubrification d'un appareil tournant dans le vide, tel qu'un volant d'inertie (1), ledit appareil comportant un axe (2) tournant par rapport à une structure porteuse fixe, par l'intermédiaire d'au moins un palier ou roulement (3A, 3B), ledit dispositif comprenant une enceinte dans laquelle est placé ledit appareil, ladite enceinte (4) étant reliée à des moyens de mise sous vide (6), **caractérisé en ce qu'**il comporte :
∘ un réservoir (8) de fluide lubrifiant relié par des conduits au bas de l'enceinte (4) d'une part, et au palier (3B) d'autre part ;
∘ un moyen de circulation du fluide apte à relier le réservoir soit aux moyens de mise sous vide (6), pour remplir le réservoir par gravité depuis l'enceinte (4), soit à l'atmosphère, pour lubrifier le palier (3A, 3B).

2. Dispositif de lubrification selon la revendication 1, **caractérisé en ce que** le moyen de circulation du fluide comporte une vanne (11) à trois voies reliant le réservoir soit aux moyens de mise sous vide (6) soit à l'atmosphère.

3. Dispositif de lubrification selon l'une des revendications 1 ou 2, **caractérisé en ce qu'**il est prévu une vanne à deux voies (10), normalement ouverte, disposée entre le réservoir (8) et l'enceinte (4).

4. Dispositif de lubrification selon la revendication 3, **caractérisé en ce que** ladite vanne à deux voies (10) est commandée par un vérin à piston (23) dont une chambre est reliée au réservoir (8), et l'autre chambre à l'enceinte (4), le piston commandant ladite vanne (10).

5. Dispositif de lubrification selon l'une des revendications 1 à 4, **caractérisé en ce qu'**il est prévu un capteur de débit disposé entre le réservoir (8) et le palier (3A), et un filtre (17) en amont du capteur.

6. Dispositif de lubrification selon l'une des revendications 1 à 5, **caractérisé en ce que** le réservoir (8) est placé au même niveau, ou plus bas, que la partie basse de l'enceinte (4).

7. Dispositif de lubrification selon l'une des revendications 1 à 6, **caractérisé en ce qu'**il comporte un clapet antiretour (16) normalement ouvert entre le réservoir et l'enceinte.

8. Dispositif de lubrification selon la revendication 1, **caractérisé en ce qu'**il comporte une électrovanne à trois voies dont les deux sorties sont reliées chacune à un roulement / palier.

9. Volant d'inertie (1) comportant un corps massique en un matériau principal, tel que du béton, disposé sur ou associé à un axe (2) tournant par rapport à une structure porteuse fixe, par au moins un palier ou roulement (3A, 3B), ledit volant étant placé dans une enceinte (4), accueillant le volant et le palier, et reliée à des moyens (6) de mise sous vide, **caractérisé en ce qu'**il comporte un dispositif de lubrification selon l'une des revendications 1 à 8.

10. Procédé de lubrification d'un volant d'inertie (1) comprenant un corps, en un matériau, tel que du béton, apte à tourner sur lui-même sur un axe vertical fixe (2), en étant en appui sur au moins un roulement/palier (3A, 3B), et comportant des moyens de lubrification, procédé dans lequel :
- on place le volant (1) dans une enceinte étanche (4);
- on prévoit un moyen de mise sous vide (tel qu'une pompe à vide) (6) relié à l'enceinte (4) ;
- on prévoit un réservoir de fluide lubrifiant ;
- on relie par des conduits le réservoir de lubrifiant au bas de l'enceinte d'une part, et au palier d'autre part ;
- on relie le réservoir (8) soit au vide, pour le remplir par gravité depuis l'enceinte, soit à l'atmosphère, pour lubrifier le palier.

## Patentansprüche

1. Schmiereinrichtung für eine im Vakuum rotierende Vorrichtung, beispielsweise ein Schwungrad (1), wobei die Vorrichtung eine Welle/Achse (2) umfasst, die in Bezug auf eine feste Tragstruktur mit Hilfe von wenigstens einem Lager oder Wälzlager (3A, 3B) drehbar ist, wobei die Einrichtung ein Gehäuse umfasst, in dem die Vorrichtung platziert ist, wobei das Gehäuse (4) mit Vakuum-Erzeugungsmitteln (6) verbunden ist,
**dadurch gekennzeichnet, dass** sie umfasst:
- einen Behälter (8) für Schmierfluid, der durch Leitungen einerseits mit dem unteren Teil des Gehäuses (4) und andererseits mit dem Lager (3B) verbunden ist;
- ein Fluid-Zirkulationsmittel, das dazu in der Lage ist, den Behälter entweder mit den Vakuum-Erzeugungsmitteln (6) zu verbinden, um den Behälter durch Schwerkraft vom Gehäuse (4) aus zu füllen, oder mit der Atmosphäre zu verbinden, um das Lager (3A, 3B) zu schmieren.

2. Schmiereinrichtung nach Anspruch 1, **dadurch gekennzeichnet, dass** das Fluid-Zirkulationsmittel ein Dreiwegeventil (11) umfasst, das den Behälter entweder mit den Vakuum-Erzeugungsmitteln (6) oder mit der Atmosphäre verbindet.

3. Schmiereinrichtung nach einem der Ansprüche 1 oder 2, **dadurch gekennzeichnet, dass** ein normalerweise offenes Zweiwegeventil (10) vorgesehen ist, welches zwischen dem Behälter (8) und dem Gehäuse (4) angeordnet ist.

4. Schmiereinrichtung nach Anspruch 3, **dadurch gekennzeichnet, dass** das Zweiwegeventil (10) durch einen Kolben-Zylinder (23) gesteuert wird, dessen eine Kammer mit dem Behälter (8) und dessen andere Kammer mit dem Gehäuse (4) verbunden ist, wobei der Kolben dieses Ventil (10) steuert.

5. Schmiereinrichtung nach einem der Ansprüche 1 bis 4, **dadurch gekennzeichnet, dass** ein Durchfluss-Sensor vorgesehen ist, der zwischen dem Behälter (8) und dem Lager (3A) angeordnet ist, und ein Filter (17) stromaufwärts von dem Sensor.

6. Schmiereinrichtung nach einem der Ansprüche 1 bis 5, **dadurch gekennzeichnet, dass** der Behälter (8) auf der gleichen Höhe oder tiefer als der untere Teil des Gehäuses (4) angeordnet ist.

7. Schmiereinrichtung nach einem der Ansprüche 1 bis 6, **dadurch gekennzeichnet, dass** sie ein normalerweise offenes Rückschlagventil (16) zwischen dem Behälter und dem Gehäuse umfasst.

8. Schmiereinrichtung nach Anspruch 1, **dadurch gekennzeichnet, dass** sie ein Dreiwege-Magnetventil umfasst, dessen zwei Ausgänge jeweils mit einem Wälzlager/Lager verbunden sind.

9. Schwungrad (1), umfassend einen Massekörper aus einem Hauptmaterial, beispielsweise Beton, der auf einer Welle/Achse (2) angeordnet oder dieser zugeordnet ist, welche in Bezug auf eine feststehende Tragstruktur mit Hilfe von wenigstens einem Lager oder Wälzlager (3A, 3B) drehbar ist, wobei das Schwungrad in einem Gehäuse (4) angeordnet ist, welches das Schwungrad und das Lager aufnimmt, und es mit Vakuum-Erzeugungsmitteln (6) verbunden ist, **dadurch gekennzeichnet, dass** es eine Schmiereinrichtung nach einem der Ansprüche 1 bis 8 umfasst.

10. Verfahren zum Schmieren eines Schwungrads (1), welches einen Körper aus einem Material wie Beton umfasst, das sich um sich selbst auf einer festen vertikalen Welle/Achse (2) drehen kann, wobei es sich auf mindestens einem Lager/Wälzlager (3A, 3B) abstützt, und welches Schmiermittel umfasst, wobei bei dem Verfahren:
- das Schwungrad (1) in einem dichten Gehäuse (4) platziert wird;
- ein Vakuum-Erzeugungsmittel (beispielsweise eine Vakuumpumpe) (6) vorgesehen wird, das mit dem Gehäuse (4) verbunden ist;
- ein Schmierfluid-Behälter vorgesehen wird;
- der Schmiermittel-Behälter durch Leitungen einerseits mit dem unteren Teil des Gehäuses und andererseits mit dem Lager verbunden wird,
- der Behälter (8) entweder mit dem Vakuum verbunden wird, um ihn durch Schwerkraft vom Gehäuse aus zu füllen, oder mit der Atmosphäre verbunden wird, um das Lager zu schmieren.

## Claims

1. A device for lubrication of a unit turning under vacuum, such as a flywheel (2), where said unit comprises an axle (2) rotating relative to a fixed bearing structure, via at least one bearing or roller (3A,3B), wherein the device comprises an enclosure in which the device is placed, said enclosure (4) being connected to means for drawing a vacuum (6), **characterized in that** it comprises:
∘ a lubricant reservoir (8) connected by pipes both to the bottom of the enclosure (4) and also to the bearing (3B);
∘ a means for circulation of the fluid suitable for connecting the reservoir either to the means for drawing a vacuum (6), for filling the reservoir from the enclosure (4) by gravity, or to the atmosphere for lubricating the bearing (3A,3B).

2. The device for lubrication according to claim 1, **characterized in that** the means of fluid circulation comprises a three-way valve (11) connecting the reservoir either to means for drawing a vacuum (6) or to the atmosphere.

3. The device for lubrication according to any of the claims 1 or 2, **characterized in that** a two-way, normally-open valve (10) is provided disposed between the reservoir (8) and the enclosure (4).

4. The device for lubrication according to claim 3, **characterized in that** said two-way valve (10) is controlled by a piston cylinder (23) where one chamber is connected to the reservoir (8), and the other chamber to the enclosure (4) and the piston controls said valve (10).

5. The device for lubrication according to any of the claims 1 to 4, **characterized in that** there is provided a flow rate sensor arranged between the reservoir (8) and the bearing (3B), and a filter (17) upstream from the sensor are provided.

6. The device for lubrication according to any of the claims 1 to 5, **characterized in that** the reservoir (8) is placed at the same level as, or lower than, the lower part of the enclosure (4).

7. The device for lubrication according to any of the claims 1 to 6, **characterized in that** the device comprises a normally-open, anti-backflow valve (16) between the reservoir and the enclosure.

8. The device for lubrication according to claim 1, **characterized in that** it comprises a three-way solenoid valve whose two outlets are each connected to a roller/bearing.

9. A flywheel comprising a massive body of a main material, such as concrete, arranged on or combined with an axle (2) turning relative to a fixed bearing structure, by at least one bearing or roller (3A,3B), said flywheel being placed in an enclosure (4), receiving the flywheel and the bearing, and connected to means for drawing vacuum (6), **characterized in that** the flywheel comprises a lubrication device according to any of the claims 1 to 8.

10. A method for lubricating a flywheel comprising a body of a material, such as concrete, rotatable about itself on a fixed vertical axle (2) bearing on at least one roller/bearing (3A,3B) and comprising lubrication means, method wherein:
- the flywheel (1) is placed in a sealed enclosure (4);
- there is provided a means for drawing vacuum, such as a vacuum pump (6), connected to the enclosure (4) ;
- a lubricating fluid reservoir is provided;
- the lubricant reservoir at the bottom of the closure and the bearing are connected to each other by pipes;
the reservoir (8) is connected either to the vacuum, to fill it by gravity from the enclosure, or to atmosphere to lubricate the bearing.
